# EUROPEAN PATENT APPLICATION

(11) **EP 3 057 073 A1**
(43) Date of publication of application: **17.08.2016**
(21) Application number: 14851733.7
(22) Date of filing: 01.10.2014
(51) Int. Cl.: G08B 13/14, G08B 25/00

(54) **METHOD AND DEVICE TO PREVENT THE THEFT OF COMMUNICATIONS CABLES**

(30) Priority: 07.10.2013 ES 201300931
(71) Applicant: Iberwave Ingenieria SLL, 28760 Tres Cantos (Madrid) (ES); Hormaza Villelabeitia, Germán, 48001 Bilbao (ES)
(72) Inventor: HORMAZA VILLELABEITIA, Germán, 48001 Bilbao (ES); NIETO MONTESANO, Francisco Miguel, E-28760 Tres Cantos (ES); NARVÁEZ RIARÁN, Javier, E-28760 Tres Cantos (ES); PEÑAS MANRIQUE, Juan Carlos, E-28760 Tres Cantos (ES)
(74) Representative: Zuazo Araluze, Alexander
(86) International application number: PCT/ES2014/000158
(87) International publication number: WO 2015/052357

(57) **Abstract**

The present invention relates to a method and device to prevent the theft of communications cables. The method comprises: continuously injecting a signal into a first end of the cable; detecting the arrival of said signal once reflected at the opposite end of the cable; additionally or alternatively, measuring the electrical capacitance and/or resistance parameters; calculating the total length of the cable as a function of the time elapsed since injection of the signal up to return arrival thereof at the first end of the cable and/or of the calculated capacitance and/or resistance values of the cable portion; and generating an alarm signal in the event of detection of an interruption in the cable when said total cable length is less than a reference total cable length.

## Description

### Technical field

The present invention generally relates to the field of protecting communications cables by means of devices to prevent theft.

### Prior art

The increase in global demand, alongside a stabilized copper production, has led to a rapid increase in the price of this material in recent years. A parallel market of stolen cable has emerged as a result. Copper theft has become a very significant economic problem since, in addition to the price of the stolen material itself, there are ensuing problems, such as supply interruption, the impossibility to provide specific services (train services, irrigation services), ensuing electrical safety problems, and damage caused to associated systems or machinery.

Stealing of copper cable usually happens in remote locations as a natural way for thieves to minimize risks. Various automatic surveillance methods, such as motion detection, surveillance by means of cameras and perimetral protection, have been proposed in the prior art for such installations. In all cases, the solution has obvious practical problems due to the special characteristics of the object to be protected. False positives due to the presence of animals or rain and the impossibility to monitor long overhead copper cables economically speaking can be mentioned among the fundamental problems of these proposed solutions.

United States patent application US 2010/0085189 A1 seeks to partially solve the drawbacks of the prior art by disclosing a method such as that described previously, furthermore inserting a low voltage into the electric circuit when said cable is not in operation. However, said method still does not adapt to complex wiring structures.

Furthermore, the previously described known systems do not provide high enough protection levels required in the field of overhead communications cables, and more specifically in the protection of overhead copper cables.

Therefore, there is currently a need on the market for a method and a device to prevent the theft of communications cables that are simple and economical, providing a reliable and secure protection thereof and at the same time applicable to complex wiring structures.

Likewise, it is considered that the mere detection of interruption in the cable is not enough. In contrast, the detection of the exact point at which interruption in the cable occurs is fundamental in order to make the task of the security forces responsible for preventing the theft easier and, as the case may be, catch the offenders.

### Summary of the invention

The present invention relates to a method and device to prevent the theft of communications cables for the purpose of generating an alarm when a break is detected in said cable.

According to a first aspect of the present invention, the method comprises:
- continuously injecting a signal into a first end of the cable;
- detecting the arrival of said signal once reflected at the opposite end of the cable;
- alternatively or additionally to the preceding steps, taking the measurement of electrical parameters in the cable, namely, the capacitance and/or resistance;
- calculating the total cable length as a function of the time elapsed since injection of the signal up to return arrival thereof at the first end of the cable, and/or of the calculated capacitance and/or resistance values of the cable portion; and
- generating an alarm signal in the event of detection of an interruption in the cable when said total cable length is less than a reference total cable length.

Therefore, the method allows rapidly generating in a simple and efficient manner an alarm signal indicating the interruption in the communications cable if the length of said cable is reduced with respect to its reference length.

Furthermore, according to a preferred embodiment of the invention, said method further comprises calculating the precise geographical location of the interruption in the cable based on the calculated total cable length, such that information on the geographical location of the interruption in the cable can be included in the alarm signal. It is therefore possible to promptly get to the precise geographical location where the theft is happening in order to catch the thieves and thus recover any cable length they were stealing at that time.

According to a second aspect, the present invention discloses a device suitable for putting the previously described method into practice. Said device comprises:
- means for continuously injecting a signal into a first end of the cable;
- means for detecting the arrival of said signal once reflected at the opposite end of the cable;
- means for measuring the resistance and capacitance of the supervised cable;
- means for calculating the total cable length as a function of the time elapsed since injection of the signal up to return arrival thereof at the first end of the cable; and
- means for generating an alarm signal in the event of detection of an interruption in the cable when said total cable length is less than a reference total cable length.

According to an even more preferred embodiment of the invention, the device also comprises means for calculating the precise geographical location of an interruption in the cable based on the calculated total cable length, such that information about the precise location which one must get to in order to prevent communications cable theft from going on can be included in the alarm signal.

It is therefore understood that, as will be described additionally below in the present document, the present invention provides a method and a device to prevent the theft of communications cables that are highly reliable and can be economically applied, since they only require the installation of the device of the invention at one end of the cable, unlike devices of the prior art which require the installation of various elements at both ends of the cable.

### Brief description of the drawings

The present invention will be better understood in reference to the following drawings illustrating a preferred embodiment of the invention which is provided by way of example and must not be interpreted as limiting of the invention in any manner.
Figure 1 shows a block diagram schematically depicting the method according to the preferred embodiment of the present invention.
Figure 2 shows a diagram of the operation of the method shown in Figure 1.

### Detailed description of the invention

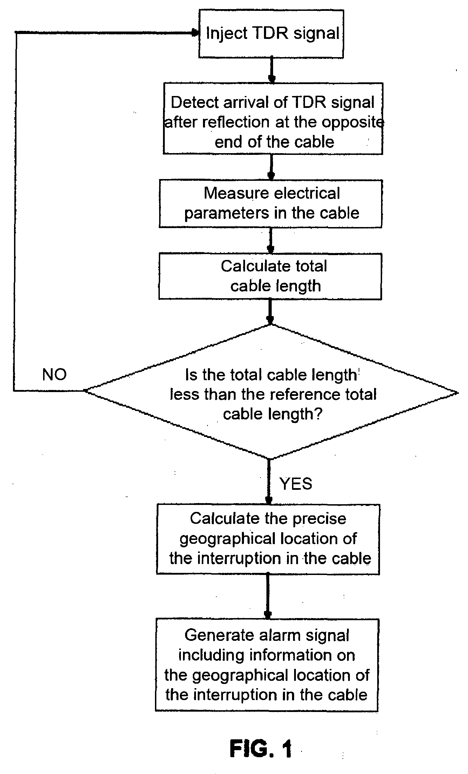

As seen in the block diagram of Figure 1, the method to prevent the theft of communications cables according to the first aspect of the present invention first comprises continuously injecting a signal into a first end of the cable. The signal injected into the communications cable is preferably a TDR (Time Domain Reflectometry) signal. Said signal arrives at the opposite end of the cable and is reflected back to the first end at which it was injected. Therefore, in a second step the method comprises detecting the arrival of said signal once reflected at the opposite end of the cable. Next, in a third step the electrical parameters in the cable (namely, the capacitance and/or resistance) are measured. This allows complementing and assuring precision in calculating the cable length. For example, in the event that interruption in a cable occurs, and that as a result of the interruption in an attempt to intentionally circumvent the alarm system, the interrupted end short-circuits, even if a TDR signal has been previously used for measurement, there would be a need to measure the resistance to determine the point of the interruption. Depending on the time needed for the signal to perform said back and forth travel between both ends of the cable, as well as, where appropriate, the capacitance and/or resistance measurement taken, in the fourth step of the method, the total cable length is calculated. In the next step of the method, the calculated total cable length is compared with the reference total cable length. If both cable lengths are the same, the method returns to the first step. However, if the calculated total cable length is less than the reference total cable length, an alarm signal is generated.

According to the preferred embodiment shown in Figure 1, the next step of the method consists of calculating the precise geographical location of the interruption in the cable. This can be performed by knowing the time used by the TDR signal to perform the back and forth travel from the end of the cable into which it was injected up to the point of interruption in the cable. An alarm signal including said information on the geographical location of the interruption in the cable is therefore generated.

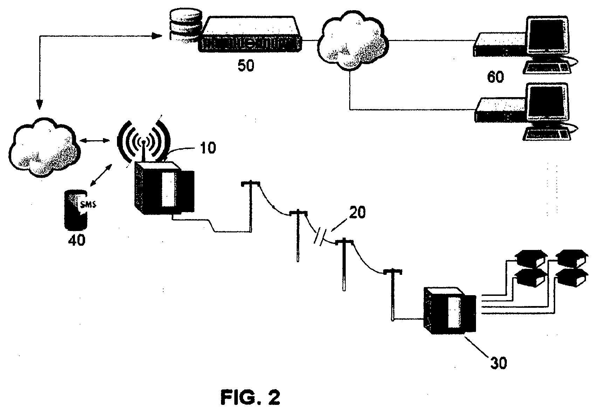

Figure 2 schematically shows the implementation of the method according to a preferred embodiment of the present invention. The device 10 of the present invention is connected to an end of the communications wiring 20 reaching an external distribution plant 30 from which it is sent to different subscribers. The device 10 furthermore has GSM/GPRS connection means for sending an alarm signal either directly to a programmed end user by means of an SMS message or an electronic mail (40) or to a database of an alarm center (50). The alarm signal can be forwarded from said alarm center to end users, to an application through a web interface, etc. (60).

The end user receiving the alarm signal either directly from the device of the invention or indirectly through the alarm center can be the proprietary client of the communications wiring, a police force, a private surveillance agency, etc.

As described above, the alarm signal preferably includes precise geographical information about the point at which interruption in the cable is occurring. This information is sent to the end user, for example, by means of a link to Google Maps™. A quick and precise response by the police or any other security force to the precise location in which the cable theft is taking place is therefore allowed, thereby improving the possibility of catching the thieves and recovering the stolen cable.

Sending the signals to an alarm center provides the following advantages:
- The information is centralized and communications protocols are more secure (bidirectional protocol, alarm confirmation, etc.)
- The state of the installation can be remotely verified (through a web interface) at any time
- The service provider also provides support and maintenance services for users.

Although the present invention has been described according to several specific embodiments thereof, they must not be interpreted as being limiting of the invention and the persons skilled in the art can easily apply modifications to the described embodiments without departing from the scope of the invention. For example, the step of measuring the capacitance and/or resistance of the cable can be performed alternatively to the injection and detection of the signal (such as a TDR signal), instead of complementarily to said injection and detection of the signal. Furthermore, it will be obvious that the method and device of the present invention can be applied both to overhead copper cables and to overhead cables made of any other electrical conductor to be protected.

Although the present invention has been described as a method and a device to prevent theft for the protection of communications cables in general, their application on copper communications cables is particularly interesting.

## Claims

1. A method to prevent the theft of communications cables, **characterized in that** it comprises:
- continuously injecting a signal into a first end of the cable;
- detecting the arrival of said signal once reflected at the opposite end of the cable;
- alternatively or additionally to the preceding steps, taking the measurement of electrical parameters in the cable, namely, the capacitance and/or resistance;
- calculating the total cable length as a function of the time elapsed since injection of the signal up to return arrival thereof at the first end of the cable, and/or of the calculated capacitance and/or resistance values of the cable portion; and
- generating an alarm signal in the event of detection of an interruption in the cable when said total cable length is less than a reference total cable length.

2. The method to prevent theft according to claim 1, **characterized in that** the sent signal is a TDR-type signal.

3. The method to prevent theft according to any of the preceding claims, **characterized in that** it further comprises the steps of:
- in the event of detection of an interruption in the cable, calculating the precise geographical location of the interruption in the cable based on the calculated total cable length; and
- including said information on the geographical location of the interruption in the cable in the alarm signal.

4. The method to prevent theft according to any of the preceding claims, **characterized in that** in the event of the generation of an alarm status, it further comprises:
- sending the alarm signal to a database of an alarm center; and
- sending information on the alarm from said alarm center to at least one programmed end user.

5. The method according to any of the preceding claims, **characterized in that** in the event of generation of an alarm status, it further comprises:
- sending an alarm signal directly to a programmed end user by means of an SMS message or an electronic mail.

6. The method according to any of claims 4 and 5, **characterized in that** the alarm signal is generated by means of a GSM/GPRS connection.

7. The method according to any of the preceding claims, **characterized in that** the electrical conductors are made of copper.

8. A device to prevent the theft of communications cables, **characterized in that** it comprises:
- means for continuously injecting a signal into a first end of the cable;
- means for detecting the arrival of said signal once reflected at the opposite end of the cable;
- means for measuring the electrical capacitance and resistance parameters of the supervised cable;
- means for calculating the total cable length as a function of the time elapsed since injection of the signal up to return arrival thereof at the first end of the cable and/or the electrical capacitance and/or resistance parameters; and
- means for generating an alarm signal in the event of detection of an interruption in the cable when said total cable length is less than a reference total cable length.

9. The device to prevent theft according to claim 8, **characterized in that** the means for injecting a signal are of a TDR type.

10. The device to prevent theft according to any of claims 8 and 9, **characterized in that** it further comprises:
- means for calculating the precise geographical location of an interruption in the cable based on the calculated total cable length.

11. The device to prevent theft according to any of claims 8 to 10, **characterized in that** it further comprises means for sending the alarm signal by means of a GSM/GPRS connection.
